# EUROPÄISCHE PATENTSCHRIFT

(11) **EP 2 549 198 B1**
(45) Veröffentlichungstag und Bekanntmachung des Hinweises auf die Patenterteilung: **18.12.2013**
(21) Anmeldenummer: 11174800.0
(22) Anmeldetag: 21.07.2011
(51) Int. Cl.: F24J 2/26, F24J 2/52

(54) **Schiene mit C-Profil und zugehöriger Solar-Kollektor**
Rail with C-profile and accompanying solar collector
Rail avec profil en C et collecteur solaire correspondant

(43) Veröffentlichungstag der Anmeldung: 23.01.2013
(73) Patentinhaber: GREENoneTEC, 9300 St. Veit/Glan (AT)
(72) Erfinder: Posch, Thomas, 9373 Klein St. Paul (AT)
(74) Vertreter: Becker, Thomas

(56) Entgegenhaltungen:
- CH-A5- 627 256
- DE-A1-102009 035 116
- DE-U1-202006 002 642
- GB-A- 2 183 817
- GB-A- 2 445 222
- US-A1- 2007 235 021

## Beschreibung

Die Erfindung betrifft eine Schiene mit C-Profil zur Konfektionierung eines Solar-Kollektors sowie den zugehörigen Solar-Kollektor selbst.

Solar-Kollektoren (Sonnenkollektoren) zur Umwandlung von Solarenergie in Wärme und insbesondere zur Erzeugung von Warm wasser, sind in zahlreichen Ausführungsformen bekannt.

Zentraler Bestandteil aller Solar-Kollektoren ist der so genannte Absorber, der aus einem Register und einem Absorberblech besteht. Das Register besteht wiederum aus einem oder mehreren Registerrohren, beispielsweise mit Durchmessern von größenordnungsmäßig 8 bis 12 mm und Sammelleitungen, beispielsweise mit Durchmessern von größenordnungsmäßig 18 bis 35 mm.

Eine bekannte Ausführungsform ist nach Art einer "Harfe" gestaltet, wobei zwischen zwei Sammelleitungen mehrere Registerrohre, parallel zueinander, verlaufen. Diese "Harfe" weist eine gute Eigensteifigkeit auf und ist leicht zu handhaben. Dies gilt auch für die Befestigung des Absorberbleches und Konfektionierung der gesamten Einheit beispielsweise als Wannen- oder Rahmenkollektor.

Das bekannte Register erfordert eine Vielzahl von Verbindungen (Anschlüssen) zwischen den Registerrohren und den zugehörigen Sammelleitungen. Dieser Aufwand wird reduziert, wenn das Register mäanderförmig gestaltet ist. In diesem Fall genügt ein einziges Registerrohr, welches eine Vielzahl, parallel zueinander verlaufender Abschnitte aufweist, die wechselnd an gegenüberliegenden Seiten mit gekrümmten Abschnitten verbunden sind. Hier genügt jeweils ein Anschluss an jedem Ende des Registerrohres mit einer zugehörigen Sammelleitung.

Nachteilig bei dieser "Harfengeometrie" ist, dass das mäanderförmig konfektionierte Registerrohr keine hohe Eigenstabilität aufweist. Die Konfektionierung zu einem Solar-Kollektor ist entsprechend schwierig.

Um die Steifigkeit (Stabilität) des Registerrohres sowie der Einheit aus Registerrohr und Sammelleitungen zu erhöhen ist es bekannt, die gekrümmten Abschnitte des Registerrohres in Schienen mit C-Profil zu führen, wobei die entsprechenden Abschnitte des Registerrohres mit der zugehörigen Schiene verklemmt werden, siehe z.B. DE-A-102009035116. Die beiden Schienen verlaufen entsprechend parallel an gegenüberliegenden Seiten des mäanderförmigen Registerrohres und meist senkrecht zu den zugehörigen Sammelleitungen.

Thermische Spannungen bei der Anwendung, insbesondere im Bereich der Verbindungspunkte zwischen Registerrohr und Absorberblech, lassen sich bei dieser bekannten Fixierung des Registerrohres in C-Schienen häufig nicht oder nicht ausreichend kompensieren.

Vor diesem Hintergrund liegt der Erfindung die Aufgabe zugrunde, eine Problemlösung anzubieten.

Die Erfindung geht von der Überlegung aus, die Stabilisierung eines mäanderförmigen Registers durch C-Schienen beizubehalten, weil sich so eine einfache und effektive Stabilisierung des Registers ergibt, die Führung des Registerrohrs in den C-Schienen aber "schwimmend" zu gestalten. "Schwimmend" bedeutet, dass die Führung des Registerrohres in den C-Schienen so ausgeführt wird, dass Registerrohr und C-Schiene eine Relativverschiebung zueinander erlauben. Im Fall von thermischen und/ oder mechanischen Spannungen auf das Registerrohr und/oder die Schiene können sich die Bauteile entsprechend innerhalb gewisser Grenzen gegeneinander bewegen, so dass indizierte Spannungen nicht weitergegeben, sondern abgebaut werden.

Die "schwimmende" Lagerung kann auf verschiedene Weise konstruktiv gelöst werden. Grundsätzlich wird der Außenquerschnitt des Registerrohrs gleich oder etwas kleiner als der Abstand der Schenkel der Schiene sein, um die gewünschte Stabilisierung des Registers durch die Schienen zu erreichen.

Bildet man bestimmte Stellen der Schiene so aus, dass der Abstand der Schenkel zum offenen Ende der Schiene hin geringer ist als in dem Bereich dahinter, lässt sich das Registerrohr gegen ein Lösen aus der Schiene durch Ausbildung der genannten Verdickung sichern. Aufgrund der diskreten (begrenzten) Form der Verdickung wird gleichzeitig eine Beweglichkeit des Registerrohres in der C-Schiene, insbesondere in deren Längsrichtung, weiter ermöglicht. Je nachdem, an welcher Stelle die Verdickung platziert wird, ergibt sich aber auch eine Beweglichkeit senkrecht zur Basis der C-Schiene.

Nach Art einer "kinematischen Umkehr" lässt sich derselbe Effekt auch dadurch erzielen, indem das Registerrohr im Krümmungsbereich einen Abschnitt aufweist, der größer (breiter) ist als der Abstand der Schenkel der C-Schiene. Ist mindestens eine C-Schiene dann in einem entsprechenden Abschnitt innenseitig mit mindestens einer diskreten Ausnehmung oder Aufweitung versehen, kann der entsprechende Abschnitt des Registerrohres darin platziert werden (beispielsweise, indem beim Einsetzen des Registerrohres in die C-Schiene die Schenkel aufgeweitet sind oder temporär etwas aufgeweitet werden, bevor sie in die Funktionsposition gebracht werden). Gleichzeitig ergibt sich eine Sicherung gegen Lösen des Registerrohres aus der Schiene senkrecht zu deren Basis.

Kombinationen der vorgennnten Ausführungsformen sind ebenfalls möglich.

In ihrer allgemeinsten Ausführungsform betrifft die Erfindung einen Solar-Kollektor nach Anspruch 1 oder Anspruch 11.

Die Verdickung kann auf unterschiedliche Art und Weise ausgebildet werden: Eine Möglichkeit sieht vor, die Verdickung direkt aus dem Schenkel auszuformen, beispielsweise durch Prägung, Stanzung, Streckformen oder dergleichen. Eine andere Möglichkeit sieht vor, dass die Verdickung innenseitig am Schenkel befestigt ist. Sie kann dort beispielsweise angeschraubt, angeklebt oder angeschweißt sein.

Die Verdickung verläuft vorzugsweise im Abstand zur Basis, so dass im Bereich zwischen Verdickung und Basis ein Bereich zwischen den Schenkeln der Schiene mit erweitertem Abstand vorhanden ist, in dem das Registerrohr geführt werden kann.

Die Verdickung kann unterschiedliche Formen aufweisen, beispielsweise eine Kalottenform, eine Wannenform oder auch die Form eines schmalen Quaders. In diesem Fall (wie die Form und Größe bei allen anderen diskreten Verdickungen) sollte die Länge des Quaders deutlich kürzer sein als der Abstand parallel verlaufender Abschnitte des Registerrohres, um eine ausreichende Beweglichkeit des Registerrohres entlang der Schienen in deren Längsrichtung zu ermöglichen.

Bei oder Ausführungsform nach Anspruch 11 kann die Ausnehmung eine sackförmige Vertiefung sein oder ein Loch, beispielsweise ein Längsschlitz im Schenkel.

Je nach Ausführungsform der Schiene ergibt sich für einen zugehörigen Solar-Kollektor eine der folgenden Ausführungsformen. Beiden ist gemeinsam, dass der Kollektor
- zwei zueinander parallel und im Abstand verlaufende Schienen aufweist, wobei die Schenkel der Schienen gegeneinander gerichtet sind,
- mindestens ein, mäanderförmig konfektioniertes Registerrohr vorgesehen ist, wobei Krümmungsbereiche des Registerrohres zumindest teilweise zwischen den Schenkeln der Schienen verlaufen, und
- der Kollektor ein Absorberblech umfasst, welches das Registerrohr auf einer Seite abdeckt und mit diesem zumindest partiell verbunden ist.

Bei der ersten eingangs genannten Ausführungsform verläuft das Registerrohr im Bereich jeder Schiene entlang mindestens je eines Krümmungsbereiches mit einem Abstand zwischen einer Verdickung und der zugehörigen Basis der Schiene, wobei der Abstand (a) zwischen der Verdickung und dem gegenüberliegenden Schenkel so gewählt ist, dass das Registerrohr nicht ohne Deformation senkrecht zur Basis der Schiene aus der Schiene entnommen werden kann.

Dabei können Registerrohr und Absorberblech aus unterschiedlichen Werkstoffen bestehen, beispielsweise kann das Registerrohr aus Kupfer, das Absorberblech aus Aluminium bestehen, wobei auch entsprechende Kombinationen inkludiert sind.

Üblicherweise wird das Registerrohr einen Kreisquerschnitt aufweisen, wobei der Außendurchmesser D dann größer ist als der Abstand (a) zwischen der Verdickung und dem gegenüberliegenden Schenkel der Schiene.

Bei der zweit-genannten Ausführungsform des Solar-Kollektors ragt das Registerrohr im Bereich jeder Schiene entlang mindestens je eines Krümmungsbereiches mit mindestens einem Abschnitt in eine korrespondierende Ausnehmung eines Schenkels der Schiene, so dass das Registerrohr nicht ohne Deformation senkrecht zur Basis der Schiene aus der Schiene entnommen werden kann.

Eine "Deformation des Registerrohres" inkludiert dabei auch den Fall einer (nicht gewünschten) Vergrößerung des Abstandes der Schenkel der Schiene.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert. Dabei zeigen:
- Figur 1:: einen Querschnitt durch eine erfindungsgemäße Schiene mit eingesetztem Registerrohr
- Figur 2:: eine perspektivische Ansicht auf einen Abschnitt eines zugehörigen Solar-Kollektors
- Figur 3:: eine Aufsicht auf einen erfindungsgemäßen Solar-Kollektor.

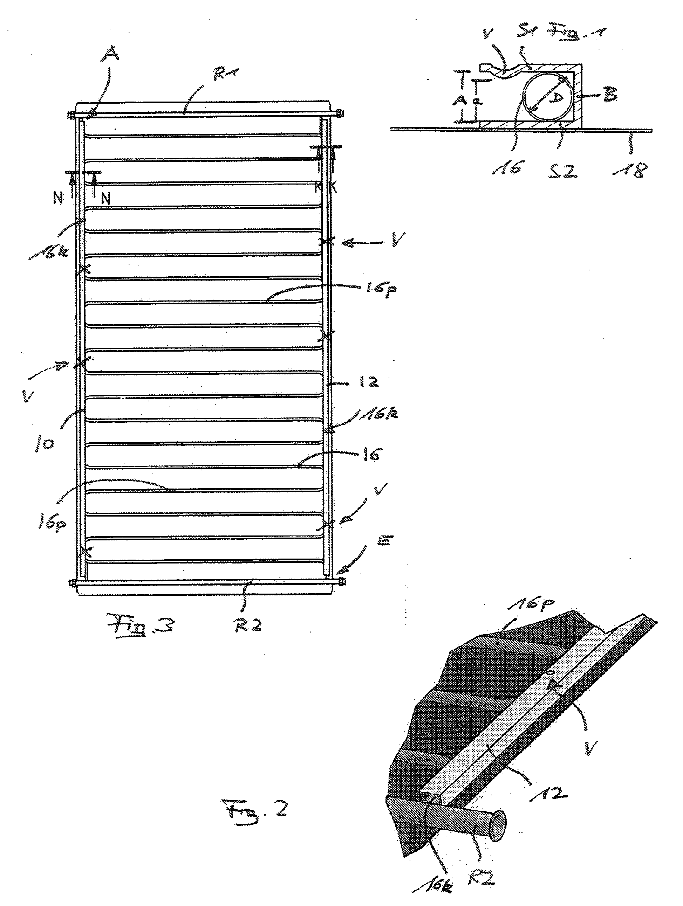

Die in Figur 1 dargestellte Schiene besteht aus einer Basis B und zwei, von der Basis B in gleicher Richtung und mit Abstand A zueinander verlaufenden Schenkeln S1, S2. Dabei definiert der Abstand A den Innenabstand der Schenkel S1, S2.

Der in der Figur obere Schenkel S1 weist an seinem Ende eine in Richtung auf den Schenkel S2 verlaufende Verdickung V auf, die den Abstand zwischen den Schenkeln S1, S2 an dieser Stelle auf a verringert.

Wie dargestellt ist die Verdickung V durch Ausprägung aus dem Schenkel S1 ausgeformt.

Die Verdickung V ist kalottenförmig, also eine diskrete Verdickung, die entsprechend in den Figuren 2, 3 schematisch jeweils nur als Kreis (Figur 2) beziehungsweise mit "X" (Figur 3) markiert ist.

Figur 3 zeigt eine Aufsicht auf einen Solar-Kollektor mit zwei, im Abstand zueinander verlaufenden Schienen 10, 12, wobei die Schenkel S1, S2 der Schienen 10, 12 gegeneinander gerichtet sind. Zwischen den Schienen 10, 12 verläuft ein mäanderförmig konfektioniertes Registerrohr 16. Dieses ist bei E an ein Sammelrohr R2 und am anderen Ende (bei A) an ein Sammelrohr R1 angeschlossen. Zwischen den Enden A, E verläuft das Registerrohr 16 mäanderförmig mit einer Vielzahl parallel zueinander verlaufender Abschnitte 16p und diese verbindenden Krümmungsbereichen 16k, die entsprechend, in Längsrichtung der Schienen 10, 12, jeweils versetzt zueinander angeordnet sind.

Die Krümmungsbereiche 16k des Registerrohres 16 verlaufen im Wesentlichen innerhalb der Schienen 10, 12 in ähnlicher Anordnung wie in Figur 1 dargestellt.

An den Stellen, an denen die Schienen 10, 12 Verdickungen V aufweisen, schaffen die Verdickungen V eine Sicherung gegen ein unbeabsichtigtes Lösen des Registerrohres 16 aus den Schienen 10, 12 (Fig. 1). Gleichzeitig folgt aus der Anordnung der Verdickungen V, dass das Registerrohr sowohl senkrecht zur Basis B als auch in Längsrichtung der Schienen eine gewisse Beweglichkeit relativ zu den Schienen 10, 12 behält (Fig. 1). Dies charakterisiert die eingangs beschriebene "schwimmende Lagerung".

Grundsätzlich können in jedem Krümmungsbereich entsprechende Schikanen/Verdickungen V ausgebildet werden. In der Regel wird es aber genügen, diese an einigen Stellen vorzusehen, so wie beispielhaft in Figur 3, aber auch in Figur 2 skizziert.

Ein zugehöriges Absorberblech ist in Figur 1 mit dem Bezugszeichen 18 gekennzeichnet. Im dargestellten Ausführungsbeispiel besteht das Registerrohr 16 aus Kupfer und das Absorberblech 18 aus Aluminium. Das Registerrohr 16 weist einen Kreisquerschnitt auf, wobei der Außendurchmesser D minimal kleiner als der Innenabstand A der Schenkel S1, S2 der Schienen 10, 12 ist.

## Patentansprüche

1. Solar-Kollektor mit folgenden Merkmalen:
a) zwei zueinander parallel und im Abstand verlaufenden Schienen (10,12), mit jeweils einer Basis (B) und zwei, von der Basis (B) in gleicher Richtung und mit Abstand (A) zueinander verlaufenden Schenkeln (S1, S2) unter Ausbildung eines C-förmigen Querschnittsprofils, wobei mindestens ein Schenkel (S1) mindestens eine diskrete Verdickung (V) aufweist, die den Abstand (a) zwischen den Schenkeln (S1, S2) an dieser Stelle verringert und die Schenkel (S1,S2) der Schienen (10,12) gegeneinander gerichtet sind,
b) mindestens einem, mäanderförmig konfektionierten Registerrohr (16), wobei Krümmungsbereiche (16k) des mindestens einen Registerrohres (16) zumindest teilweise zwischen den Schenkeln (S1,S2) der Schienen (10,12) verlaufen, und
c) einem Absorberblech (18), welches das mindestens eine Registerrohr (16) auf einer Seite abdeckt und mit diesem zumindest partiell verbunden ist, wobei
d) das mindestens eine Registerrohr (16) im Bereich jeder Schiene (10,12) entlang mindestens je eines Krümmungsbereichs (16k) mit einem Abschnitt zwischen der mindestens einen Verdickung (V) und der zugehörigen Basis (B) verläuft und der Abstand (a) zwischen der mindestens einen Verdickung (V) und dem gegenüberliegenden Schenkel (S2) so gewählt ist, dass das mindestens eine Registerrohr (16) nicht ohne Deformation senkrecht zur Basis (B) der Schiene (10,12) aus der Schiene (10,12) entnommen werden kann.

2. Solar-Kollektor nach Anspruch 1, bei dem das mindestens eine Registerrohr (16) und Absorberblech (18) aus unterschiedlichen Werkstoffen bestehen.

3. Solar-Kollektor nach Anspruch 1 wobei das mindestens eine Registerrohr (16) aus Kupfer oder einem Absorberblech (18) aus Aluminium oder beidem.

4. Solar-Kollektor nach Anspruch 1, dessen mindestens eine Registerrohr (16) einen Kreisquerschnitt mit einem Außendurchmesser D aufweist und der Abstand (a) zwischen der mindestens einen Verdickung (V) und dem gegenüberliegenden Schenkel (S2) kleiner als der Außendurchmesser D des mindestens einen Registerrohrs (16) ist.

5. Solar-Kollektor nach Anspruch 1, bei der die mindestens eine Verdickung (V) aus dem Schenkel (S1) einer Schiene (10, 12) ausgeformt ist.

6. Solar-Kollektor nach Anspruch 1, bei der die mindestens eine Verdickung (V) aus dem mindestens eine Schenkel (S1) einer Schiene (10, 12) durch Prägung ausgeformt ist.

7. Solar-Kollektor nach Anspruch 1, bei der die mindestens eine Verdickung innenseitig am mindestens eine Schenkel einer Schiene befestigt ist.

8. Solar-Kollektor nach Anspruch 1, bei der die mindestens eine Verdickung (V) im Abstand zur Basis (B) einer Schiene (10, 12) verläuft.

9. Solar-Kollektor nach Anspruch 1, bei der die mindestens eine Verdickung (V) angenähert eine Kalottenform aufweist.

10. Solar-Kollektor nach Anspruch 1, bei der die mindestens eine Verdickung angenähert die Form eines schmalen Quaders hat.

11. Solar-Kollektor mit folgenden Merkmalen:
a) zwei zueinander parallel und im Abstand verlaufenden Schienen (10,12), mit jeweils einer Basis (B) und zwei, von der Basis (B) in gleicher Richtung und mit Abstand (A) zueinander verlaufenden Schenkeln (S1, S2) unter Ausbildung eines C-förmigen Querschnittsprofils, wobei mindestens ein Schenkel (S1) mindestens eine diskrete Ausnehmung (A) oder Aufweitung aufweist, die den Abstand (a) zwischen den Schenkeln (S1, S2) an dieser Stelle vergrößert und die Schenkel (S1,S2) der Schienen (10,12) gegeneinander gerichtet sind,
b) mindestens einem, mäanderförmig konfektionierten Registerrohr (16), wobei Krümmungsbereiche (16k) des Registerrohres (16) zumindest teilweise zwischen den Schenkeln (S1,S2) der Schienen (10,12) verlaufen, und
c) einem Absorberblech (18), welches das mindestens eine Registerrohr (16) auf einer Seite abdeckt und mit diesem zumindest partiell verbunden ist, wobei
d) das mindestens eine Registerrohr (16) im Bereich jeder Schiene (10,12) entlang mindestens je eines Krümmungsbereichs (16k) mit mindestens einem Abschnitt in eine korrespondierende der mindestens einen Ausnehmung oder Aufweitung des mindestens einen Schenkels (S1,S2) der Schiene hineinragt, so dass das mindestens eine Registerrohr (16) nicht ohne Deformation senkrecht zur Basis (B) der Schiene (10,12) aus der Schiene (10,12) entnommen werden kann.

12. Solar-Kollektor nach Anspruch 11, bei der die mindestens eine Ausnehmung Aufweitung eine sackförmige Vertiefung ist.

13. Solar-Kollektor nach Anspruch 11, bei der die mindestens eine Ausnehmung oder Aufweitung von einem Loch im Schenkel einer Schiene gebildet wird.

## Claims

1. Solar collector with the following characteristics:
a. two bars (10,12), running parallel and at a distance to each other, each with a base (B) and two brackets (S1, S2), running away from the base (B) in the same direction and at a distance (A) to each other, forming a C-shaped cross sectional profile, wherein at least one bracket (S1) features at least one discrete thickening (V), which decreases the distance (a) between the brackets (S1, 52) at this point and the brackets (S1, 52) of the bars (10, 12) are facing each other,
b. at least one, in a meander-shape assembled header pipe (16), wherein areas of curvature (16k) of the at least one header pipe (16) run at least partially between the brackets (S1, S2) of the bars (10, 12), and
c. an absorber plate (18) which is at least partially connected to and covers the at least one header pipe (16) on one side, wherein
d. in the area of each bar (10, 12), the at least one header pipe (16) runs with one segment between the at least one thickening (V) and the corresponding base (B) along at least one area of curvature (16k) each, and the distance (a) between the at least one thickening (V) and the opposite bracket (S2) is chosen in such a way that the header pipe (16) cannot be removed perpendicularly to the base (B) of the bar (10, 12) without deformation.

2. Solar collector according to claim 1, wherein the at least one header pipe (16) and the absorber plate (18) consist of different materials.

3. Solar collector according to claim 1 with the at least one header pipe (16) consisting of aluminium or an absorber plate (18) consisting of aluminium or both.

4. Solar collector according to claim 1, whose at least one header pipe (16) features a circular cross section with an outer diameter D and wherein the distance (a) between the at least one thickening (V) and the opposite bracket (S2) is smaller than the outer diameter D of the at least one header pipe (16).

5. Solar collector according to claim 1, wherein the at least one thickening (V) is moulded out of the bracket (S1) of a bar (10, 12).

6. Solar collector according to claim 1, wherein the at least one thickening (V) is moulded out of the bracken (S1) of a bar (10, 12) by embossing.

7. Solar collector according to claim 1, wherein the at least one thickening (V) is mounted onto the inside of a bracket of a bar.

8. Solar collector according to claim 1, wherein the at least one thickening (V) runs at a distance to the base (B) of a bar (10, 12).

9. Solar collector according to claim 1, wherein the at least one thickening (V) roughly features a dome shape.

10. Solar collector according to claim 1, wherein the at least one thickening roughly features the shape of a slim cuboid.

11. Solar collector with the following characteristics:
a. two bars (10, 12), running parallel and at a distance to each other, with a base (B) each and two brackets (S1, S2), running away from the base (B) in the same direction and at a distance (A) from each other, forming a C-shaped cross sectional profile, wherein at least one bracket (S1) features at least one discrete recess (A) or widening, which increases the distance (a) between the brackets (S1, S2) at this point and the brackets (S1, S2) of the bars (10, 12) are facing each other,
b. at least one, in a meander-shape assembled header pipe (16), wherein the areas of curvature (16k) of the header pipe (16) run at least partially between the brackets (S1, S2) of the bars (10, 12), and
c. an absorber plate (18) which is at least partially connected to and covers the at least one header pipe (16) on one side, wherein
d. in the area of each bar (10, 12), the at least one header pipe (16) extends with at least one segment into the at least one recess or widening of the at least one bracket (S1, S2) along at least one area of curvature (16k) each, so that the header pipe (16) cannot be removed from the bar (10, 12) perpendicular to the base (B) of the bar (10, 12) without deformation.

12. Solar collector according to claim 11, wherein the at least one recess or widening is a sack-like cavity (dimple).

13. Solar collector according to claim 11, wherein the at least one recess or widening is formed by a hole in the bracket of the bar.

## Revendications

1. Capteur solaire avec les caractéristiques suivantes :
a) deux rails (10, 12) parallèles l'un à l'autre et passant à distance avec respectivement une base (B) et deux montants (S1, S2) allant de la base (B) dans la même direction et à distance (A) l'un de l'autre en formant un profil de section en forme de C, un montant (S1) au moins présentant au moins un épaississement (V) discret qui réduit l'intervalle (a) entre les montants (S1, S2) à cet endroit et les montants (S1, S2) des rails (10, 12) étant dirigés l'un vers l'autre,
b) au moins un tube de registre (16) confectionné en forme de méandre, des zones courbes (16k) de au moins un tube de registre (16) passant au moins en partie entre les montants (S1, S2) des rails (10, 12), et
c) une tôle d'absorbeur (18) qui recouvre le au moins un tube de registre (16) sur un côté et est relié au moins en partie à celui-ci,
d) le tube de registre (16) passant dans la zone de chaque rail (10, 12) le long d'au moins à chaque fois une zone de courbe (16k) avec une section entre au moins un épaississement (V) et la base (B) correspondante et l'intervalle (a) entre le au moins un épaississement (V) et le montant (S2) opposé étant choisi de sorte que le au moins un tube de registre (16) peut être enlevé du rail (10, 12) sans déformation perpendiculairement à la base (B) du rail (10, 12).

2. Capteur solaire selon la revendication 1, pour lequel le au moins un tube de registre (16) et une tôle d'absorbeur (18) sont en matériaux différents.

3. Capteur solaire selon la revendication 1, pour lequel le au moins un tube de registre (16) est en cuivre ou en une tôle d'absorbeur (18) ou les deux.

4. Capteur solaire selon la revendication 1, dont au moins un tube de registre (16) présente une section circulaire avec un diamètre extérieur D et l'intervalle (a) entre le au moins un épaississement (V) et le montant (S2) opposé est plus petit que le diamètre extérieur D du au moins un tube de registre (16).

5. Capteur solaire selon la revendication 1, pour lequel le au moins un épaississement (V) est formé à partir du montant (S1) d'un rail (10, 12).

6. Capteur solaire selon la revendication 1, pour lequel le au moins un épaississement (V) est formé par estampage à partir d'au moins un montant (S1) d'un rail (10, 12).

7. Capteur solaire selon la revendication 1, pour lequel le au moins un épaississement est fixé à l'intérieur à au moins un montant d'un rail.

8. Capteur solaire selon la revendication 1, pour lequel le au moins un épaississement (V) passe à distance de la base (B) d'un rail (10, 12).

9. Capteur solaire selon la revendication 1, pour lequel le au moins un épaississement (V) présente à peu près une forme de calotte.

10. Capteur solaire selon la revendication 1, pour lequel le au moins un épaississement a à peu près la forme d'un parallélépipède étroit.

11. Capteur solaire avec les caractéristiques suivantes :
a) deux rails (10, 12) parallèles l'un à l'autre et passant à distance avec respectivement une base (B) et deux montants (S1, S2) allant de la base (B) dans la même direction et à distance (A) l'un de l'autre en formant un profil de section en forme de C, pour lequel au moins un montant (S1) présente au moins un évidement (A) ou élargissement discret, qui agrandit l'intervalle (a) entre les montants (S1, S2) à cet endroit et les montants (S1, S2) des rails (10, 12) sont dirigés l'un vers l'autre,
b) au moins un tube de registre (16) confectionné en forme de méandre, pour lequel des zones de courbe (16k) du tube de registre (16) passent au moins en partie entre les montants (S1, S2) des rails (10, 12) et
c) une tôle d'absorbeur (18) qui recouvre le au moins un tube de registre (16) sur un côté et est reliée au moins en partie à celui-ci,
d) le au moins un tube de registre (16) dans la zone de chaque rail (10, 12) le long d'au moins à chaque fois une zone de courbe (16k) avec au moins une section se prolonge dans un au moins un évidement correspondant ou élargissement de au moins un montant (S1, S2) du rail de sorte que le au moins un tube de registre (16) peut être enlevé du rail (10, 12) sans déformation perpendiculairement à la base (B) du rail (10, 12).

12. Capteur solaire selon la revendication 11, pour lequel le au moins un évidement ou élargissement est un creux en forme de poche.

13. Capteur solaire selon la revendication 11, pour lequel le au moins évidement ou élargissement est formé par un trou dans le montant d'un rail.
